Europäisches Patentamt

European Patent Office

Office européen des brevets

(19)

(11)  **EP 0 660 561 B1**

(12)  **FASCICULE DE BREVET EUROPEEN**

(45) Date de publication et mention
de la délivrance du brevet:
**12.05.2004  Bulletin 2004/20**

(51) Int Cl.[7]: **H04L 7/10**, H04L 7/04

(21) Numéro de dépôt: **94410109.6**

(22) Date de dépôt: **21.12.1994**

(54)  **Circuit de reconnaissance d'une séquence de mots dans un modem**

Schaltung zur Erkennung einer Sequenz von Wörtern in einem Modem

Circuit for recognition of a sequence of words in a modem

(84) Etats contractants désignés:
**DE FR GB IT**

(30) Priorité: **23.12.1993  FR 9315942**

(43) Date de publication de la demande:
**28.06.1995  Bulletin 1995/26**

(73) Titulaire: **STMicroelectronics S.A.**
**92120 Montrouge (FR)**

(72) Inventeur: **Glass, William**
**F-38170 Seyssinet-Pariset (FR)**

(74) Mandataire: **de Beaumont, Michel**
**1bis, rue Champollion**
**38000 Grenoble (FR)**

(56) Documents cités:
**EP-A- 0 238 100**

• **IEEE TRANSACTIONS ON COMMUNICATIONS, vol.27, no.9, Septembre 1979, NEW YORK US pages 1296 - 1301 R. WILSON ET AL. 'Generation and Performance of Quadraphase Welti Codes for Radar and Synchronization of Coherent and Differentially Coherent PSK'**
• **PATENT ABSTRACTS OF JAPAN vol. 17, no. 328 (E-1385) 22 Juin 1993 & JP-A-05 037 511 (NEC)**

## Description

La présente invention concerne le domaine des modems numériques et plus particulièrement l'opération d'identification de séquences prédéterminées de mots de consigne lors des phases de mise en route (apprentissage) d'un modem ou de phases intermédiaires de réapprentissage ou de changement de rythme.

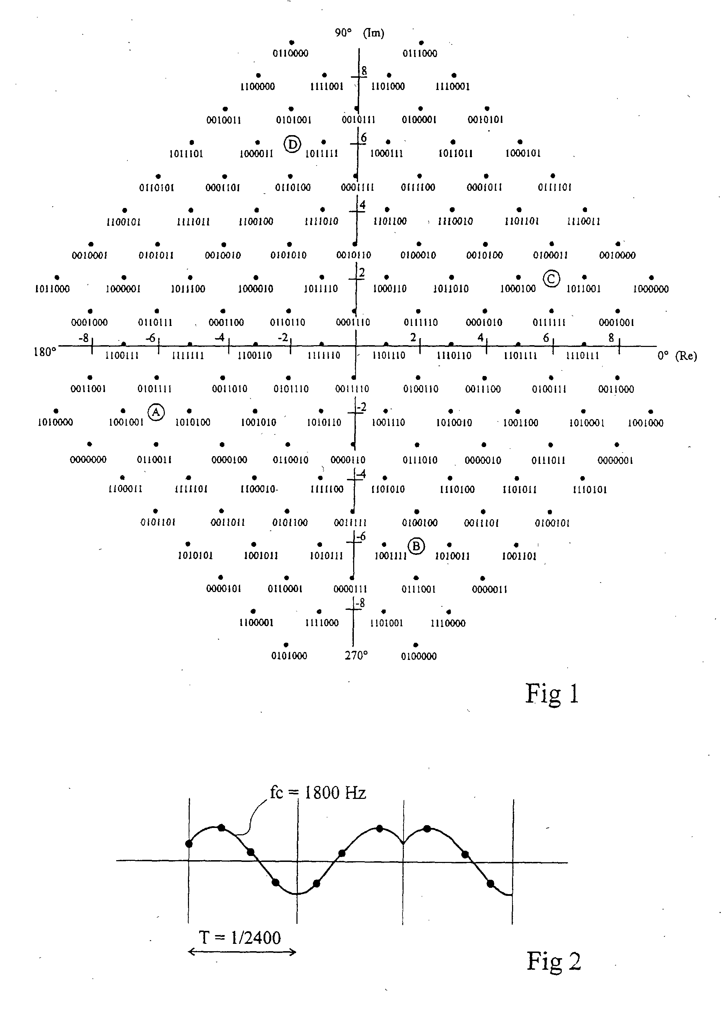

Dans un modem numérique, les données à transmettre sont codées sous forme numérique à partir d'un oertain nombre de symboles puis transmises sous forme de portions d'une porteuse sinusoïdale modulée en phase et en amplitude. Les divers symboles, par exemple 128 dans la norme V32bis, correspondront chacun à un signal de phase et d'amplitude déterminées. Pour illustrer cette conversion, on peut disposer les symboles en une constellation telle que représentée en figure 1 où chaque symbole est placé en un point correspondant à la phase et à l'amplitude de modulation du signal qui le traduit. Ainsi, comme le représente la figure 2, chaque symbole sera émis sous forme d'une portion de sinusoïde ou baud. Dans le cas de la norme V32bis, la porteuse a une fréquence de 1800 Hz, les bauds se répètent à une fréquence de 2400 Hz, et l'onde sinusoïdale est formée et décodée à partir d'une fréquence d'échantillonnage plus élevée que la fréquence de chaque portion de sinusoïde et multiple de celle-ci, par exemple 9600 Hz.

Après décodage, chaque symbole reçu est transformé en un mot numérique M comprenant une première portion $\underline{a}$ correspondant à la valeur réelle du mot émis et une deuxième portion $\underline{b}$ correspondant à la valeur imaginaire de ce mot. Ainsi; chaque mot peut s'exprimer par :

$$M = a+jb.$$

En raison des cadences très élevées d'échange entre modems, la qualité de la liaison téléphonique devient de plus en plus importante pour assurer des transferts fiables de données entre deux modems. Des défauts éventuels tels qu'une atténuation des fréquences élevées du spectre, des échos locaux et éloignés avec décalage de fréquence, des gigues de phase et du bruit influencent la cadence maximale utilisable en conservant un taux d'erreur minimale admissible. Dans le cas de la norme susmentionnée, le signal complexe démodulé reçu par un modem est codé en amplitude et en phase et une constellation telle que celle représentée en figure 1 contient 128 valeurs possibles destinées à être émises à une cadence de 14400 bits par seconde. Quand les défauts susmentionnés deviennent plus importants, la différence entre le point reçu et le point idéal à recevoir ou erreur de réception devient de plus en plus grande jusqu'à ce que, éventuellement, le mécanisme de décision du modem récepteur puisse confondre deux ou plusieurs points adjacents ce qui provoque des erreurs inadmissibles à la réception.

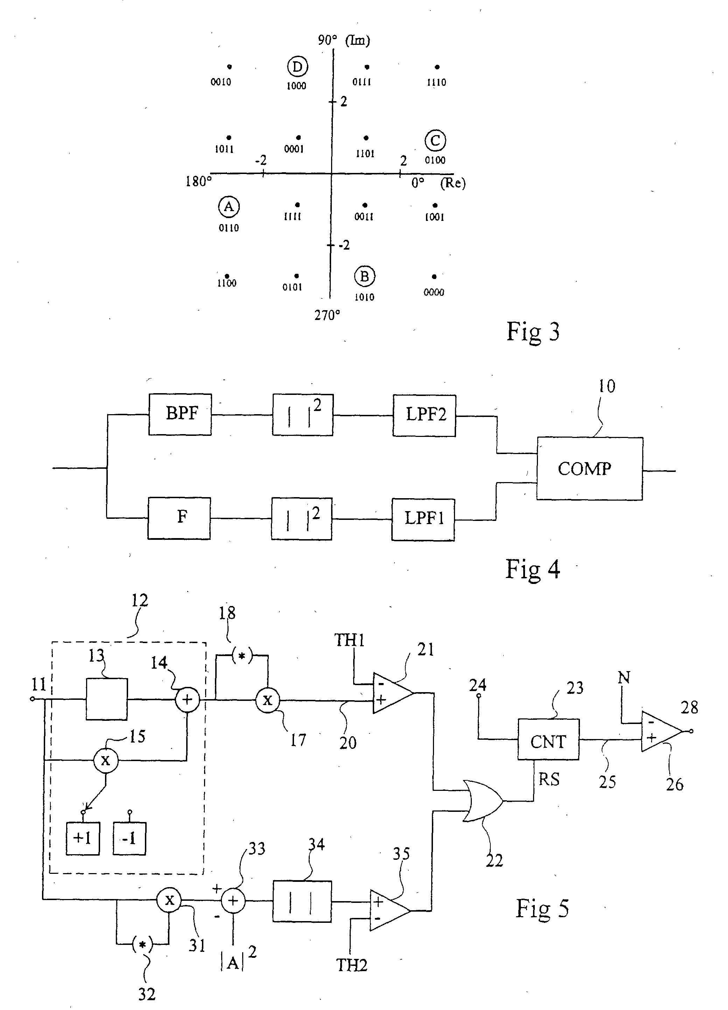

A l'autre extrême, une connexion à une cadence beaucoup plus faible, telle que 7200 bits par seconde utilise une constellation de seulement 16 valeurs telle que représentée en figure 3 et permet de beaucoup mieux tolérer des défauts de ligne. Ces défauts peuvent varier au cours d'une communication et la cadence de transmission initiale devra être augmentée ou réduite pour trouver la valeur optimale. De façon générale, un micro-contrôleur est connecté au modem et peut surveiller la qualité du signal reçu, cette valeur correspondant à l'inverse de l'erreur de réception moyenne. Si cette erreur devient trop importante, les recommandations CCITT prévoient une procédure de renégociation de cadence qui est de très courte durée pour n'interrompre la transmission de données que pendant une durée très courte de 288 bauds (120 ms) plus le retard de va-et-vient entre les deux modems.

Le signal de renégociation de cadence contient notamment un préambule qui est constitué d'une séquence de signaux prédéterminés répétée un nombre donné de fois. Usuellement, cette séquence correspond à une suite de signaux AA pour le modem appelant et à une suite de signaux AC pour le modem appelé. Cette séquence est répétée 56 fois. Si l'on considère les signaux transmis sous forme d'une succession de portions de sinusoïde, une séquence de signaux AA correspond à une onde sinusoïdale pure à une fréquence de 1800 Hz et une séquence de signaux AC comprend deux composantes de fréquence à 600 et 3000 Hz.

Un procédé actuellement utilisé pour identifier ces séquences de signaux AA ou AC fait appel à deux ensembles de filtres numériques à l'avant du bloc de réception du modem. Comme le représente la figure 4, l'ensemble inférieur contient un pré-filtre F qui laisse passer seulement les fréquences comprises entre 600 et 1800 Hz, un calculateur d'énergie (fournissant le carré de la valeur absolue du signal) et un filtre passe-bas du premier ordre LPF1. L'ensemble supérieur contient un filtre passe-bande très sélectif BPF centré sur 600 ou 1800 hertz suivi d'un autre calculateur d'énergie et d'un filtre passe-bas LPF2. Les sorties des filtres passe-bas LPF1 et LPF2 sont envoyées à un comparateur 10. Quand des séquences de signaux AA ou AC sont présentes et que le filtre passe-bande BPF est respectivement centré sur 600 ou 1800 Hz, l'énergie dans l'ensemble supérieur est comparable à celle de l'ensemble inférieur. En présence d'un signal de données, l'ensemble supérieur fournit un niveau bien plus faible que l'ensemble inférieur. Ce procédé classique est satisfaisant pour la détection de séquences AA et AC lors de la procédure d'apprentissage initial ou de réapprentissage quand la durée d'analyse est relativement longue. Toutefois, pour des opérations à effectuer rapidement telles qu'une opération de renégociation de cadence, ce système est moins satisfaisant car il nécessite notamment un filtre passe-bande BPF relativement étroit, ce qui implique un temps de réponse relativement élevé. Si l'on veut réduire ce temps de réponse, on diminue la sélectivité et il en résulte un risque de fausse détection. Un autre procédé d'identification de séquences est décrit dans le document EP-A-0 238 100.

Ainsi, un objet de la présente invention est de prévoir un circuit de reconnaissance de séquence de signaux prédéterminés à temps de réponse relativement rapide.

Un autre objet de la présente invention est de prévoir un tel circuit de reconnaissance n'utilisant pas de circuit de filtrage.

Pour atteindre ces objets, la présente invention prévoit un procédé d'identification d'une séquence déterminée répétitive de signaux déterminés arrivant sur un modem, chacun de ces signaux étant numérisé sous forme d'un mot ayant une première portion correspondant à une valeur réelle et une deuxième portion correspondant à une valeur imaginaire, comprenant les étapes consistant à retarder chacun des mots d'une séquence pour qu'ils soient tous présents simultanément ; ; procéder à une combinaison linéaire desdits mots propre à fournir un mot combiné de valeurs réelle et imaginaire nulles ; déterminer le module de chaque mot combiné ; comparer ce module à un seuil ; quand le module du mot combiné est inférieur au seuil, compter des impulsions d'une horloge correspondant au rythme d'arrivée des mots ; et fournir un signal d'identification quand un nombre prédéterminé de signaux d'horloge a été compté.

Selon un mode de réalisation de la présente invention, chaque séquence comprend deux mots dont l'un est l'inverse de l'autre, la combinaison linéaire consistant en une addition.

Selon un mode de réalisation de la présente invention, chaque séquence comprend deux mots identiques, la combinaison linéaire consistant en une soustraction.

Selon un mode de réalisation de la présente invention, les mots de la séquence ont tous un même module prédéterminé, et le procédé comprend en outre les étapes consistant à déterminer le module de chaque mot incident et à inhiber le comptage quand ce module s'écarte de sa valeur prédéterminée de plus qu'un seuil déterminé.

La présente invention prévoit aussi un dispositif d'identification d'une séquence déterminée répétitive de signaux déterminés arrivant sur un modem, chacun de ces signaux étant numérisé sous forme d'un mot comprenant une première portion correspondant à une valeur réelle et une deuxième portion correspondant à une valeur imaginaire. Ce dispositif comprend des moyens de retard pour retarder convenablement chacun des mots d'une séquence pour qu'ils soient tous présents simultanément ; des moyens de combinaison linéaire desdits mots propres à fournir un mot combiné de valeurs réelle et imaginaire nulles ; des moyens de calcul du module de chaque mot combiné ; des moyens de comparaison de ce module à un seuil ; des moyens de comptage des impulsions d'une horloge correspondant au rythme d'arrivée des mots ; des moyens d'inhibition des moyens de comptage quand le module du mot combiné est inférieur au seuil, et des moyens de fourniture d'un signal d'identification quand un nombre prédéterminé de signaux d'horloge a été compté.

Ces objets, caractéristiques et avantages ainsi que d'autres de la présente invention seront exposés en détail dans la description suivante de modes de réalisation particuliers faite, à titre illustratif, en relation avec les figures jointes parmi lesquelles :

la figure 1 représente une constellation à 128 symboles selon la norme V.32bis ;
la figure 2 représente à titre d'exemple la façon dont chaque symbole est envoyé sur une ligne téléphonique ;
la figure 3 représente une constellation de 16 symboles selon la norme V.32bis ; la figure 4 représente un circuit d'identification d'une séquence de signaux AA ou AC selon l'art antérieur ; et
la figure 5 représente à titre d'exemple un mode de réalisation de la présente invention dans le cadre de la reconnaissance d'une séquence de signaux AA ou AC.

Le circuit selon la présente invention représenté en figure 5 fait partie d'un modem en phase de réception et reçoit sur son entrée 11 des signaux numérisés. Ces signaux arrivent au rythme d'une horloge de bauds ou horloge de symboles et sont par exemple constitués d'un mot constitué de deux portions successives de 16 bits correspondant respectivement à la partie réelle et à la partie imaginaire du symbole reçu. Ces mots d'entrée sont envoyés à un circuit combinatoire 12 qui, dans l'exemple représenté, comprend une mémoire 13 d'un mot (partie réelle et partie imaginaire) dont la sortie est fournie à un additionneur complexe 14. L'autre entrée de cet additionneur reçoit le signal d'entrée 11 après passage dans un multiplieur 15. On procède ainsi à une combinaison linéaire de deux mots successifs. Dans le cas où la séquence à reconnaître est constituée d'une succession de mots identiques, par exemple AAA..., le multiplieur 15 est un multiplieur par -1 et, si cette séquence est reçue, la sortie de l'additionneur 14 est normalement nulle. Si la séquence attendue est la séquence ACAC... (se reporter aux figures 1 et 3), c'est-à-dire une séquence de bauds dont l'un est l'inverse du suivant (dans la présente description, le mot inverse est pris au sens de négatif), le multiplieur est un multiplieur par +1 et la sortie de l'additionneur 14 est normalement nulle si la séquence ACAC... est reçue. On notera plus généralement que l'on peut prévoir simplement un circuit combinatoire 12 permettant de combiner des signaux successifs de valeurs déterminées pour fournir une valeur nulle en sortie quand ces signaux sont reçus.

En pratique, étant donné qu'il existe toujours du bruit sur les lignes, la sortie de l'additionneur 14 ne sera pas strictement nulle quand les signaux incidents sont les signaux recherchés. En conséquence, l'additionneur 14 est suivi d'un circuit de calcul d'énergie, comprenant un multiplieur 17 qui reçoit d'une part directement la sortie du signal 14, d'autre part cette sortie par l'intermédiaire d'un circuit de fourniture du complexe conjugué 18. Le signal 20 de sortie du multiplieur 17 est envoyé à une première entrée d'un comparateur 21 qui compare ce signal à un seuil TH1. Ce comparateur a une sortie à niveau haut quand le signal sur l'entrée 20 est supérieur au seuil et une sortie à niveau bas quand ce signal est inférieur au seuil. La sortie du comparateur 21 est envoyée par l'intermédiaire d'une porte OU 22 à l'entrée de remise à zéro RS d'un compteur 23 qui reçoit sur son entrée 24 des signaux arrivant au même rythme que l'introduction des données sur l'entrée 11, c'est-à-dire que le signal sur l'entrée 24 est normalement l'horloge de bauds. Ainsi, tant que la sortie du comparateur 21 est à niveau bas, le compteur 23 compte et dès que la sortie 21 passe à haut niveau, le compteur est remis à zéro et le comptage suivant repart de zéro. La sortie du compteur 23 est appliquée à une entrée 25 d'un comparateur 26 qui compare cette sortie à une valeur N prédéterminée, par exemple égale à 32. Ainsi, quand un comptage égal à 32 s'est produit, un signal apparaît sur la borne de sortie 28 du comparateur 26. Ce signal sur la borne 28 est un signal d'identification puisqu'il signifie que la sortie du comparateur 21 a été 32 fois de suite à bas niveau, c'est-à-dire que 32 fois de suite son entrée 20 a été inférieure au seuil TH1. Ceci signifie que l'on a reçu 32 fois de suite des signaux correspondant à une séquence ACAC... (dans le cas où le multiplieur 15 est un multiplieur par +1) ou une séquence AAAA... (dans le cas où le multiplieur 15 est un multiplieur par - 1).

Il est en effet nécessaire d'attendre un certain nombre de passages à niveau bas du signal 20 pour identifier de façon certaine une séquence car le circuit de combinaison 12 fournit une sortie basse chaque fois que des signaux successifs présentant entre eux une relation déterminée (par exemple identiques ou inverses) lui arrivent et ceci pourrait survenir au cours d'une transmission de signal pour des signaux particuliers, comme on s'en convaincra en regardant à nouveau les constellations des figures 1 et 3.

Il se produit toutefois un cas où il est possible que l'on fasse une fausse identification d'une séquence telle que la séquence ACAC..., c'est le cas où aucun signal n'arrive sur la borne 11 ou plutôt seulement du bruit par suite d'un dysfonctionnement temporaire de la liaison téléphonique. La branche inférieure du circuit de la figure 5 permet de résoudre ce cas et de lever simultanément d'autres ambiguïtés.

Cette branche inférieure comprend un circuit de détermination d'énergie du signal incident qui comprend un multiplieur 31 dont la première entrée reçoit directement le signal de la borne 11 et dont la deuxième entrée reçoit le signal complexe conjugué par l'intermédiaire d'un circuit 32. A cette énergie est soustraite l'énergie moyenne A2 d'un signal A ou C (dont on notera qu'ils ont le même module). Cette opération est effectuée dans un additionneur 33 dont la sortie est fournie à un circuit 34 de détermination de valeur absolue. La sortie du circuit 34 est envoyée à la première entrée d'un comparateur 35 dont la deuxième entrée reçoit un signal de seuil TH2. La sortie du comparateur 35 est envoyée à une deuxième entrée de la porte OU 22. Ainsi, si le signal sur la borne 11 est un signal ayant le même module qu'un signal A ou C, la sortie du circuit 34 sera sensiblement nulle et la sortie du comparateur 35 sera à zéro. Ce signal sera donc sans effet sur la sortie de la porte OU 22. Par contre, si le signal sur la borne 11 a un module autre que celui de A, par exemple parce qu'il correspond à un symbole de valeur différente ou parce qu'il correspond seulement à du bruit, la sortie du comparateur 35 sera à niveau haut et le comptage du compteur 23 sera remis à zéro.

Divers autres circuits de sécurité peuvent être imaginés par l'homme de métier.

Bien entendu, alors que certaines des explications précédentes ont été données par souci de clarté en utilisant un vocabulaire qui correspond parfois à un fonctionnement analogique, il sera clair pour l'homme de métier que tous les éléments du circuit selon la présente invention traitent des signaux numériques et que les constituants du circuit illustrés sous forme matérielle correspondront souvent en pratique à des réalisations logicielles.

## Revendications

1. Procédé d'identification d'une séquence déterminée répétitive de signaux déterminés arrivant sur un modem, chacun de ces signaux étant numérisé sous forme d'un mot ayant une première portion correspondant à une valeur réelle et une deuxième portion correspondant à une valeur imaginaire, **caractérisé en ce qu'**il comprend des étapes suivantes :

   retarder chacun des mots d'une séquence pour qu'ils soient tous présents simultanément ;
   procéder à une combinaison linéaire desdits mots propre à fournir un mot combiné de valeurs réelle et imaginaire nulles ;
   déterminer le module de chaque mot combiné ;
   comparer ce module à un seuil ;
   quand le module du mot combiné est inférieur au seuil, compter des impulsions d'une horloge correspondant au rythme d'arrivée des mots ; et
   fournir un signal d'identification quand un nombre prédéterminé de signaux d'horloge a été compté.

**2.** Procédé selon la revendication 1, **caractérisé en ce que** chaque séquence comprend deux mots (AC) dont l'un est l'inverse de l'autre, la combinaison linéaire consistant en une addition.

**3.** Procédé selon la revendication 1, **caractérisé en ce que** chaque séquence comprend deux mots (AA) identiques, la combinaison linéaire consistant en une soustraction.

**4.** Procédé selon la revendication 1, dans lequel les mots de la séquence ont tous un même module prédéterminé, **caractérisé en ce qu'**il comprend en outre les étapes suivantes :

déterminer le module de chaque mot incident ; inhiber le comptage quand ce module s'écarte de sa valeur prédéterminée de plus qu'un seuil déterminé.

**5.** Dispositif d'identification d'une séquence déterminée répétitive de signaux déterminés arrivant sur un modem, chacun de ces signaux étant numérisé sous forme d'un mot comprenant une première portion correspondant à une valeur réelle et une deuxième portion correspondant à une valeur imaginaire, **caractérisé en ce qu'**il comprend :

des moyens de retard (13) pour retarder convenablement chacun des mots d'une séquence pour qu'ils soient tous présents simultanément ; des moyens (14, 15) de combinaison linéaire desdits mots propres à fournir un mot combiné de valeurs réelle et imaginaire nulles ; des moyens (17, 18) de calcul du module de chaque mot combiné ; des moyens (21) de comparaison de ce module à un seuil (TH1) ; des moyens (23) de comptage des impulsions (24) d'une horloge correspondant au rythme d'arrivée des mots ; des moyens (22, RS) d'inhibition des moyens de comptage quand le module du mot combiné est inférieur au seuil ; et des moyens (26) de fourniture d'un signal d'identification (28) quand un nombre prédéterminé (N) de signaux d'horloge a été compté.

**6.** Dispositif selon la revendication 5, dans lequel les mots de la séquence ont tous un même module prédéterminé, **caractérisé en ce qu'**il comprend :

des moyens (31) pour déterminer le module de chaque mot incident ; des moyens (33-35) agissant sur les moyens d'inhibition (22, RS) quand ce module s'écarte de sa valeur prédéterminée de plus qu'un seuil déterminé (TH2).

**Claims**

**1.** A process for identifying a determined repetitive sequence of predetermined signals arriving on a modem, each signal being digitized as a word having a first portion corresponding to a real value and a second portion corresponding to an imaginary value, **characterized in that** it includes the following steps:

- delaying each word of a sequence so that the words are simultaneously present;
- linearly combining said words to provide a combined word having null real and imaginary values;
- determining the modulus of each combined word;
- comparing said modulus with a threshold;
- when the modulus of the combined word is lower than the threshold, counting clock pulses corresponding to the rate at which said words arrive; and
- providing an identification signal when a predetermined number of clock signals is counted.

**2.** The process of claim 1, **characterized in that** each sequence includes two words (AC), one of which is the inverse of the other, the linear combination being an addition.

**3.** The process of claim 1, **characterized in that** each sequence includes two identical words (AA), the linear combination being a subtraction.

**4.** The process of claim 1, wherein all the words of the sequence have a predetermined modulus, **characterized in that** it further includes the following steps:

- determining the modulus of each incoming word;
- inhibiting counting when said modulus deviates from its predetermined value by more than a predetermined threshold.

**5.** A device for identifying a repetitive predetermined sequence of determined signals arriving on a modem, each of said signals being digitized as a word including a first portion corresponding to a real value and a second portion corresponding to an imaginary value, **characterized in that** it includes:

- means (13) for suitably delaying each word of a sequence in order that all the words are present simultaneously;

- means (14, 15) for linearly combining said words to provide a combined word having null real and imaginary values;
- means (17, 18) for calculating the modulus of each combined word;
- means (21) for comparing said modulus with a threshold (TH1);
- means (23) for counting clock pulses (24) corresponding to the rate of arrival of the words;
- means (22, RS) for inhibiting said counting means when the modulus of the combined word is lower than the threshold; and
- means (26) for providing an identification signal (28) when a predetermined number (N) of clock signals has been counted.

6. The device of claim 5, wherein all the words of the sequence have the same predetermined modulus, **characterized in that** it includes:

- means (31) for determining the modulus of each incoming word;
- means (33-35) acting on the inhibition means (22, RS) when said modulus departs from its predetermined value by more than a determined threshold (TH2).

**Patentansprüche**

1. Verfahren zum Identifizieren einer bestimmten repetitiven Sequenz von an einem Modem ankommenden bestimmten Signalen, wobei jedes dieser Signale in Form eines Worts digitalisiert ist, das einen einem Realwert bzw. -betrag entsprechenden ersten Teil und einen einem Imaginärwert bzw. -betrag entsprechenden zweiten Teil besitzt, d*adurch gekennzeichnet*, daß das Verfahren die folgenden Schritte bzw. Stufen umfaßt :

   Verzögern jeweils jedes Worts einer Sequenz, derart daß alle Wörter gleichzeitig vorliegen;
   Vornahme einer linearen Kombination der genannten Wörter solcherart, daß ein kombiniertes Wort mit Realbetrag und Imaginärbetrag jeweils Null gebildet wird;
   Bestimmen des Moduls jeweils jedes kombinierten Worts;
   Vergleichen dieses Moduls mit einem Schwellwert;
   wenn der Modul des kombinierten Worts kleiner als der Schwellwert ist, Zählen der Impulse eines dem Rhythmus des Eintreffens der Wörter entsprechenden Takts; und
   Bilden eines Identifizierungssignals, sobald eine vorgegebene Zahl von Taktsignalen gezählt wurde.

2. Verfahren nach Anspruch 1, **dadurch gekennzeichnet, daß** jeweils jede Sequenz zwei Wörter ( AC ) umfaßt, von welchen das eine das Inverse des anderen ist, wobei die Linearkombination aus einer Addition besteht.

3. Verfahren nach Anspruch 1, **dadurch gekennzeichnet, daß** jeweils jede Sequenz zwei identische Wörter ( AA ) umfaßt, wobei die Linearkombination aus einer Subtraktion besteht.

4. Verfahren nach Anspruch 1, bei welchem die Wörter der Sequenz sämtlich einen selben vorgegebenen Modul besitzen, **dadurch gekennzeichnet, daß** das Verfahren des weiteren die folgenden Schritte bzw. Stufen umfaßt:

   Bestimmen des Moduls jeweils jedes ankommenden Worts;
   Inhibieren der Zählung, wenn dieser Modul sich von seinem vorgegebenen Wert um mehr als einen gegebenen Schwellwert unterscheidet.

5. Vorrichtung zum Identifizieren einer bestimmten repetitiven Sequenz von bestimmten an einem Modem ankommenden Signalen, wobei jedes dieser Signale jeweils in Form eines Worts digitalisiert ist, das einen einem Realwert entsprechenden ersten Teil und einen einem Imaginärwert entsprechenden zweiten Teil umfaßt, **dadurch gekennzeichnet, daß** die Vorrichtung umfaßt:

   Verzögerungsmittel (13) zum geeigneten Verzögern jeweils jedes der Wörter einer Sequenz, derart daß sie alle gleichzeitig vorliegen;
   Mittel ( 14, 15 ) zum geeigneten linearen Kombinieren der genannten Wörter zur Bildung eines kombinierten Worts mit Realteil und mit Imaginärteil jeweils Null;
   Mittel ( 17, 18 ) zum Berechnen des Moduls jeweils jedes kombinierten Worts;
   Mittel ( 21 ) zum Vergleichen dieses Moduls mit einem Schwellwert ( TH1 ) ;
   Mittel ( 23 ) zum Zählen der Impulse eines dem Eintreffrhythmus der Wörter entsprechenden Takts;
   Mittel (22, RS ) zum Inhibieren der Zählmittel, wenn der Modul des kombinierten Worts kleiner als der Schwellwert ist; sowie
   Mittel (26 ) zur Bildung eines Identifizierungssignals ( 28 ), sobald eine vorgegebene Zahl ( N ) von Taktimpulsen gezählt wurde.

6. Vorrichtung nach Anspruch 5, bei welcher die Wörter der Sequenz alle einen selben vorgegebenen Modul besitzen, **dadurch gekennzeichnet, daß** die Vorrichtung umfaßt :

Mittel (31 ) zum Bestimmen des Moduls jeweils jedes ankommenden Worts;

Mittel (33 - 35 ) , welche auf die Inhibierungsmittel ( 22, RS ) einwirken, wenn dieser Modul sich von seinem vorbestimmten Wert um mehr als einen bestimmten Schwellwert ( TH2 ) un-terscheidet.

90°  (Im)

0110000          0111000

8

1100000     1111001     1101000     1110001

0010011     0101001     0010111     0100001     0010101

D   6

1011101     1000011     1011111     1000111     1011011     1000101

0110101     0000101     0110100     0000111     0111100     0000011     0111101

4

1100101     1111011     1100100     1111010     1101100     1110010     1101101     1110011

0010001     0101011     0010010     0101010     0010110     0100010     0010100     0100011     0010000

2

1011000     1000001     1011100     1000010     1011110     1000110     1011010     1000100   C  1011001     1000000

0001000     0110111     0001100     0110110     0001110     0111110     0001010     0111111     0001001

180°   -8          -6          -4          -2                    2          4          6          8            0° (Re)

1100111     1111111     1100110     1111110     1101110     1110110     1101111     1110111

0011001     0101111     0011010     0101110     0011110     0100110     0011100     0100111     0011000

1010000     1001001   A  1010100     1001010     1010110     1001110     1010010     1001100     1010001     1001000

-2

0000000     0110011     0000100     0110010     0000110     0111010     0000010     0111011     0000001

1100011     1111101     1100010     1111100     1101010     1110100     1101011     1110101

-4

0101101     0011011     0101100     0011111     0100100     0011101     0100101

1010101     1001011     1010111     1001111   B  1010011     1001101

-6

0000101     0110001     0000111     0111001     0000011

1100001     1111000     1101001     1110000

-8

0101000     270°     0100000

Fig 1

fc = 1800 Hz

T = 1/2400

Fig 2

Fig 3

Fig 4

Fig 5